Europäisches Patentamt

European Patent Office

Office européen des brevets

(19)

(11) Veröffentlichungsnummer: **0 197 507 B1**

(12) **EUROPÄISCHE PATENTSCHRIFT**

(45) Veröffentlichungstag der Patentschrift: **10.07.91**

(51) Int. Cl.⁵: **C22B 34/12, C01G 23/053**

(21) Anmeldenummer: **86104537.5**

(22) Anmeldetag: **03.04.86**

(54) **Verfahren zur Herstellung von Titandioxid.**

(30) Priorität: **12.04.85 DE 3513120**

(43) Veröffentlichungstag der Anmeldung:
**15.10.86 Patentblatt 86/42**

(45) Bekanntmachung des Hinweises auf die
Patenterteilung:
**10.07.91 Patentblatt 91/28**

(84) Benannte Vertragsstaaten:
**BE DE FR GB IT NL**

(56) Entgegenhaltungen:
**EP-A- 0 097 259       EP-A- 0 132 820**
**EP-A- 0 133 505       DE-A- 2 618 121**
**DE-B- 1 119 835       DE-B- 1 129 140**
**FR-A- 1 300 603       FR-A- 1 548 343**
**GB-A- 909 933**

(73) Patentinhaber: **BAYER AG**

**W-5090 Leverkusen 1 Bayerwerk(DE)**

(72) Erfinder: **Gerken, Rudolf, Dr.**
**Rather Strasse 79**
**W-4150 Krefeld(DE)**
Erfinder: **Lailach, Günter, Dr.**
**Bodelschwinghstrasse 23**
**W-4150 Krefeld(DE)**
Erfinder: **von Deuten, Klaus, Dr.**
**Doerperhofstrasse 39**
**W-4150 Krefeld(DE)**

**Beschreibung**

Die vorliegende Erfindung betrifft ein Verfahren zur Herstellung von Titandioxid durch diskontinuierlichen Aufschluß von Titanschlacke mit Schwefelsäure, Herstellen einer für die Hydrolyse geeigneten Titanylsulfatlösung aus dem beim Aufschluß erhaltenen festen Aufschlußkuchen, Hydrolyse des Titanylsulfats, Abtrennen und Kalzinieren des titanhaltigen Hydrolysats, Eindampfen der vom Hydrolysat abgetrennten Dünnsäure und Wiederverwendung der aus der eingedampften Dünnsäure abgetrennten Schwefelsäure beim Titanschlackeaufschluß.

Zunehmend wird die Forderung nach einem Recycling der Schwefelsäure aus dem $TiO_2$-Herstellungsprozeß nach dem Sulfatverfahren erhoben. Außer den zu erwartenden wirtschaftlichen Nachteilen im Vergleich zur Dünnsäureverklappung standen einer Verwirklichung oft auch technische Probleme entgegen.

Ein Verfahren zur Aufarbeitung von Dünnsäuren ist aus der DE-A 3 327 769 bekannt und wird im industriellen Maßstab angewandt. Je nach den örtlichen Gegebenheiten können hier aber Probleme auftreten, wenn die Dünnsäure nahezu vollständig recycliert werden soll.

Nach den derzeit propagierten Aufbereitungsverfahren wird die Dünnsäure, bevorzugt durch mehrstufige Vakuumeindampfung, so weit konzentriert, daß von den während der Eindampfung kristallisierten Metallsulfaten eine 60-70 %ige Schwefelsäure mit einem geringen Gehalt gelöster Metallsulfate abgetrennt werden kann.

Die Konzentration dieser zurückgewonnenen Schwefelsäure ist aber im allgemeinen zu gering, um im Gemisch mit frischer Schwefelsäure oder Oleum, die zum Ersatz der Schwefelsäureverluste (durch Metallsulfatbildung, Restfeuchte an den abgetrennten Metallsulfaten, Abwasser) erforderlich sind, eine für den diskontinuierlichen Rohstoffaufschluß geeignete Startkonzentration der Schwefelsäure zu ergeben. Deshalb ist es erforderlich, die von den Metallsulfaten abgetrennte Schwefelsäure weiter einzudampfen, was beispielsweise unter Ausnutzung der Abwärme aus der $TiO_2$-Kalzinierung erfolgen kann (EP-A 97 259).

Je größer der Anteil der recyclierten Schwefelsäure am Gesamteinsatz ist, desto höher muß die Konzentration der recyclierten Säure sein. Mit steigender Konzentration nehmen aber energetischer und technischer Aufwand stark zu. Insbesondere bei einem Einsatz der aus ökologischer Sicht vorteilhaften Titanschlacken als Rohstoff ist eine besonders hohe Konzentration der recyclierten Säure notwendig, wenn die technisch mögliche maximale Recyclierung angestrebt wird.

Eine günstigere Situation ergibt sich, wenn die relativ geringen Schwefelsäureverluste beim Aufschluß der Titanschlacken durch 95-98 %ige Schwefelsäure ("Frischsäure") anstatt durch Oleum ersetzt werden können. So kann auf die Herstellung von Oleum verzichtet werden.

Für diesen Fall besteht entsprechend dem Stand der Technik nur die Möglichkeit, die Recyclierung in einer Hochkonzentrierungsanlage (z.B. Destillation nach Pauling) auf ca. 96 % zu konzentrieren (Ullmanns Encyklopädie d. techn. Chemie, 4.Aufl., Bd. 18, S. 579, Verlag Chemie, Weinheim 1979). Dieser Verfahrensschritt ist aber sowohl bezüglich der Investitionskosten wie der Energie- und Instandhaltungskosten äußerst aufwendig.

Die Aufgabe der vorliegenden Erfindung ist es somit, ein Verfahren zur Verfügung zu stellen, welches in wirtschaftlicher Weise die genannten Nachteile des Standes der Technik nicht aufweist.

Überraschenderweise kann diese Aufgabe durch die folgende Kombination von Maßnahmen gelöst werden:

- Eindampfen der von den Metallsulfaten abgetrennten 60-75 %igen, gelöste Metallsulfate enthaltenden Schwefelsäure unter Vakuum in Horizontal- oder Umlaufverdampfern bei 120-190 °C auf 76-87 % $H_2SO_4$ (bezogen auf salzfreie Schwefelsäure),
- Mischen der gemahlenen Titanschlacke mit 95-98 %iger Schwefelsäure bei 30-80 °C und Zugabe der Recycliersäure mit einer Temperatur von 80-190 °C, vorzugsweise 100-160 °C.

Gegenstand der vorliegenden Erfindung ist somit ein Verfahren zur Herstellung von Titandioxid durch diskontinuierlichen Aufschluß von Titanschlacke mit Schwefelsäure, Herstellen einer für die Hydrolyse geeigneten Titanylsulfatlösung aus dem beim Aufschluß erhaltenen festen Aufschlußkuchen, Hydrolyse des Titanylsulfats, Abtrennen und Kalzinieren des titanhaltigen Hydrolysats, Eindampfen der vom Hydrolysat abgetrennten Dünnsäure und Wiederverwendung der aus der eingedampften Dünnsaure abgetrennten Schwefelsäure beim Titanschlackeaufschluß, wobei nach der Eindampfung der Dünnsäure von den festen Metallsulfaten und -hydrogensulfaten eine 60-75 %ige vorkonzentrierte Schwefelsäure abgetrennt wird, die unter Vakuum bis zu einer Konzentration zwischen 76 und 87 % $H_2SO_4$ (als salzfreie Schwefelsäure) weiter eingedampft und zusammen mit 30 bis 80 °C warmer 95- bis 98%iger Schwefelsäure beim Aufschluß der gemahlenen Titanschlacke eingesetzt wird, wobei die Aufschlußreaktion durch Zugabe von 80 bis 190 °C heißer 76 - 87%iger Schwefelsäure gestartet wird.

Die Erfindung gibt also auch die Lehre, unter welchen Bedingungen die Titanschlacke aufgeschlossen werden soll, um die erforderliche Konzentration der recyclierten Schwefelsäure und damit auch die Kosten der Schwefelsäurekonzentrierung so gering wie möglich zu halten.

Vorteilhafterweise wird die Titanschlacke mit 50 bis 80° C warmer 95- bis 98%iger Schwefelsäure ("Frischsäure") gemischt.

Durch die Zugabe der aus der Schwefelsäureeindampfung ungekühlt oder schwach gekühlt abgegebenen Recycliersäure zur warmen Frischsäure-Schlacke-Mischung wird der Aufschluß gestartet. Das dem Stand der Technik entsprechende Verfahren, den Aufschluß durch Zugabe von Wasser oder Einleiten von Dampf zu starten, würde eine wesentlich höhere Konzentration der Recycliersäure erfordern als das erfindungsgemäße Verfahren.

Eine besonders bevorzugte Ausführungsform des erfindungsgemäßen Verfahrens besteht darin, daß die Aufschlußreaktion durch Zugabe von 100 bis 160° C heißer 76- bis 87%iger Schwefelsäure ("Recycliersäure") gestartet wird.

Eine weitere Herabsetzung der für den diskontinuierlichen Schlackeaufschluß erforderlichen Mindest-Schwefelsäurekonzentration um 2-3 % unter Erhalt der üblichen $TiO_2$-Ausbeute gelingt dadurch, daß nach Erreichen der maximalen Reaktionstemperatur während der Reifezeit Dampf statt Luft durch den Aufschlußkuchen geblasen wird.

In einer besonders günstigen Weise wird das erfindungsgemäße Verfahren so durchgeführt, daß die Konzentration der Schwefelsäure beim Start der Aufschlußreaktion zwischen 87 und 91 %, vorzugsweise 88 und 90 % $H_2SO_4$ (gerechnet als feststoff- und salzfreie Säure) liegt und 35 bis 70 % der benötigten Schwefelsäure als Recycliersäure aus dem Prozeß zurückgewonnen werden.

Die erforderlichen Temperaturen der Frischsäure und der Recycliersäure können erfindungsgemäß dadurch gesenkt werden, daß die Titanschlacke feiner gemahlen wird.

Vorteilhafterweise wird die Herstellung der 76 bis 87 %igen Säure aus 60 bis 75 %iger vorkonzentrierter Schwefelsäure durch Eindampfen bei 120 bis 190° C und 40 bis 150 mbar vorgenommen.

Für diese Eindampfvorgänge sind nicht nur aus energetischen Gründen Horizontalverdampfer mit Tantalwärmeaustauschern oder Umlaufverdampfer besonders geeignet.

Bei der Beurteilung des erfindungsgemäßen Verfahrens muß somit auch berücksichtigt werden, daß bei der Herstellung der Recycliersäure Sekundärenergie statt Primärenergie angewendet werden kann, und daß die Investitions- und Instandhaltungskosten wesentlich geringer sind als bei der Eindampfung nach dem Pauling-Verfahren.

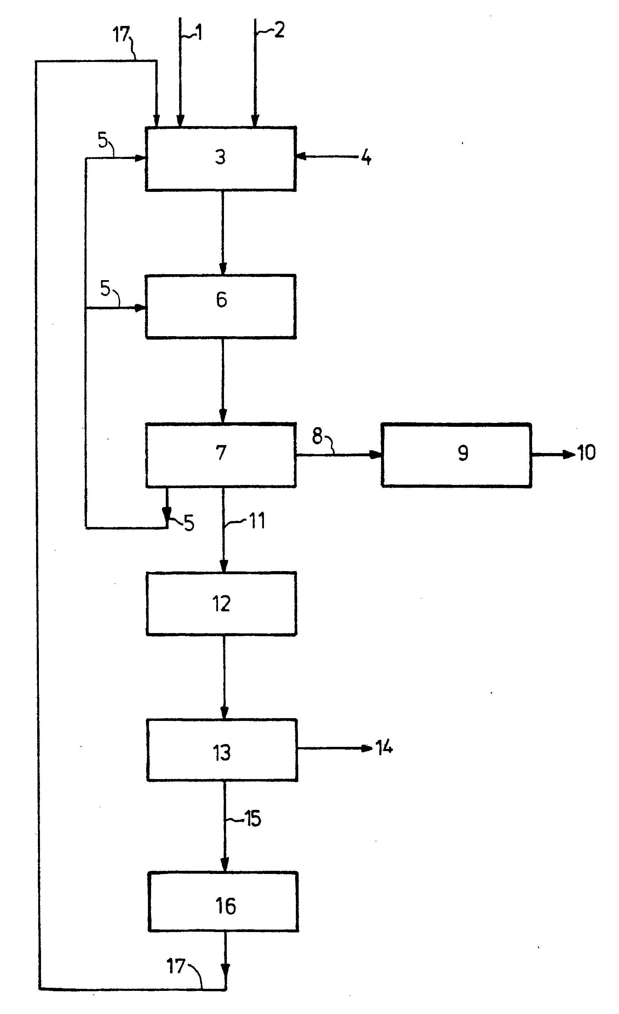

Zur Illustration des erfindungsgemäßen Verfahrens dient die Abbildung.

Die für den Rohstoffaufschluß benötigte Frischsäure (1) wird im Aufschlußreaktor (3) oder in einem vorgeschalteten Mischer mit der gemahlenen Titanschlacke (2) (gegebenenfalls unter Zusatz von gemahlenem Ilmenit) gemischt. Die Frischsäure soll eine Temperatur von 30-80° C, vorzugsweise 50-80° C haben. In den Aufschlußreaktor (3) wird, unter Durchblasen der vorgelegten Mischung mit Luft, die benötigte Menge Recycliersäure (17) mit einer Temperatur von 80 bis 190° C, vorzugsweise 100 bis 160° C, eingespeist und dadurch die exotherme Reaktion gestartet. Wenn nach Erreichen der maximalen Reaktionstemperatur die Lufteinblasung durch die Einblasung von mindestens 150° C heißem Dampf (4) ersetzt wird, kann das Abfallen der Temperatur der Aufschlußmasse verringert und die $TiO_2$-Ausbeute verbessert werden. Nach einer Reifezeit von 5-8 h, nach der erfahrungsgemäß keine Verbesserung der $TiO_2$-Ausbeute mehr zu erwarten ist, wird der Aufschlußkuchen mit Wasser oder bevorzugt mit schwefelsaurem Waschwasser (5) aus der $TiO(OH)_2$-Hydrolysatfiltration, gelöst.

Die Titanylsulfatlösung wird in bekannter Weise für die Hydrolyse vorbereitet. Bei der Hydrolyse (6) wird vorzugsweise schwefelsaures Waschwasser (5) als Verdünnungswasser eingesetzt. Das Hydrolysat (8) wird in bekannter Weise zu Titandioxid (10) kalziniert (9).

Die bei der Filtration (7) anfallende Metallsulfat-haltige Schwefelsäure (Dünnsäure) (11) hat normalerweise eine Konzentration von 20-27 % $H_2SO_4$. Sie kann unter Ausnutzung von Prozeßwärme voreingedampft werden, bevor sie in einer, vorzugsweise mehrstufigen, Vakuumeindampfanlage in an sich bekannter Weise so weit eingedampft wird (12), daß nach Abtrennung aller Metallsulfate eine 60-75 %ige Schwefelsäure resultiert ( = Eindampfung I).

Nach dem Abkühlen der aus der Eindampfung I ausgespeisten Suspension auf 40-70° C werden die Metallsulfate (14), vorzugsweise durch Filtration (13), von der Schwefelsäure abgetrennt.

Die Metallsulfate liegen zum Teil als Hydrogensulfate vor und enthalten als Feuchte 60-75 %ige Schwefelsäure. Es ist deshalb vorteilhaft, dieses "Filtersalz" thermisch unter Bildung von $SO_2$ zu spalten und daraus die als Frischsäure benötigte 95-98 %ige Schwefelsäure herzustellen. Jedoch ist auch eine Umsetzung mit Ca-Verbindungen (DE-A 3 327 770) oder eine andere schadlose Beseitigung möglich.

Schwefelsäureverluste treten vor allem durch das Filtersalz auf, aber auch durch die Feuchte der festen Aufschlußrückstände, die im $TiO(OH)_2$ gebundene Schwefelsäure und das unvermeidbare Abwasser. Als

3

vorkonzentrierte Säure können deshalb nur etwa 40-60 % der beim Aufschluß eingesetzten Schwefelsäure zurückgewonnen werden. Mit 60-75 % $H_2SO_4$ ist die Konzentration dieser Säure aber zu gering, um im Gemisch mit der benötigten 95-98 %igen Frischsäure einen autothermen Schlackeaufschluß zu ermöglichen.

Deshalb muß die vorkonzentrierte Säure (15), die noch etwa 3-6 Gew.-% gelöste Metallsulfate enthält, in einer Eindampfung II (16) auf 76-87 % $H_2SO_4$ (als salzfreie Säure) eingedampft werden, bevor sie zum Rohstoffaufschluß recycliert (17) werden kann. Erfindungsgemäß erfolgt die Eindampfung II (16) durch Vakuumeindampfung bei 120-190 °C. Als Verdamfersysteme kommen Umlaufverdampfer oder Horizontalverdampfer mit Tantalwärmetauschern infrage. Bevorzugt werden Horizontalverdampfer wegen der besonders hohen spezifischen Verdampfungsleistung (bezogen auf die Tantalwärmetauscherfläche). Vorteilhaft ist die Vorwärmung der vorkonzentrierten Schwefelsäure bis nahe an den Siedepunkt (bei gegebenem Verdampfungsdruck). Für die Vorwärmung werden dampfbeheizte Graphitwärmetauscher bevorzugt. Die Kühlung der aus dem Verdampfer ausgespeisten Recycliersäure unterbleibt entweder oder wird gegebenenfalls durch die eingespeiste vorkonzentrierte Säure nur so weit durchgeführt, daß die Temperatur der Recycliersäure ausreicht, die Aufschlußreaktion auf die oben beschriebene Weise zu starten, d.h. daß die Temperatur im Bereich von 80-190 °C liegt.

Ein wesentlicher Vorteil des erfindungsgemäßen Verfahrens liegt darin, daß durch Einsatz der Recycliersäure mit einer Temperatur von 80-190 °C Probleme vermieden werden, die beim weiteren Abkühlen dieser Säure entstehen, weil dann die in der Säure gelösten Metallsufate (etwa 4-7 Gew.-%) in äußerst feinteiliger Form kristallisieren. Da diese Salze zum Abscheiden auf Kühlflächen neigen, führen sie zu häufigen Störungen des Betriebsablaufes.

Diese Probleme können vermieden werden, indem die Recycliersäure mit einer Temperatur eingesetzt wird, bei der die gelösten Metallsulfate noch nicht kristallisieren.

Das erfindungsgemäße Verfahren, das wesentlich wirtschaftlicher ist als die nach dem Stand der Technik übliche Hochkonzentrierung der recyclierbaren Schwefelsäure auf ca. 96 % $H_2SO_4$ und das Starten der Aufschlußreaktion durch Einleiten von Dampf in die Schwefelsäure-Schlacke-Mischung, soll anhand der folgenden Beispiele erläutert werden, ohne daß darin eine Einschränkung zu sehen ist.

Beispiel 1 (Vergleichsbeispiel)

17,5 t gemahlener Titanschlacke wurden mit 18 t metallsulfathaltiger Recycliersäure und mit 13,6 t frischer 96 %iger Schwefelsäure (20 °C) gemischt. Die Aufschlußreaktion wurde durch Zugabe von 1,4 t Wassers und Einleiten von 0,6 t Wasserdampfes gestartet. Nach 10 min war die maximale Reaktionstemperatur von 203 °C erreicht. Nach dem Start der Reaktion wurde die Mischung mit Luft (30 min lang mit 350 $m^3_n$/h, danach 7 h lang mit 20 $m^3_n$/h) durchblasen. Nach 7 h Reifezeit hatte der Aufschlußkuchen eine Temperatur von 169 °C. Die $TiO_2$-Ausbeute betrug 95,3 %.

Der Aufschlußkuchen wurde mit einem Teil des schwefelsauren Waschwassers aus der Hydrolysatfiltration (5,4 Gew.-% $H_2SO_4$) gelöst. Nach der Aufarbeitung der Titanylsulfatlösung wurde unter Verwendung eines weiteren Teils des schwefelsauren Waschwassers als Verdünnungswasser hydrolysiert.

Aus der Hydrolysatfiltration wurden 85 t Dünnsäure mit 23,2 % $H_2SO_4$ und 29,8 % $SO_4^{2-}$ (gesamt) abgetrennt. Die Dünnsäure wurde in einem 2-stufigen Vakuumverdampfer so weit eingedampft, daß die salzfreie Schwefelsäure eine Konzentration von 66 % $H_2SO_4$ hatte. Dabei wurden zur Verdampfung von 47,5 t $H_2O$ 31 t 5bar-Dampfes verbraucht.

Aus der Metallsulfat-Schwefelsäure-Suspension wurden nach Abkühlen auf 55 °C 11,3 t schwefelsäurehaltigen Filterkuchens abgetrennt. Die vorkonzentrierte Säure (25,7 t) enthielt 62,8 % $H_2SO_4$, 32,4 % $H_2O$ und 4,8 % gelöste Metallsulfate,

Die vorkonzentrierte Säure wurde in einem Plinke-Pauling-Kessel auf 96 % $H_2SO_4$ (als salzfreie Säure gerechnet) bei 330 °C unter Normaldruck eingedampft. Dazu waren 1225 $m^3_n$ Erdgas (Heizwert: 31,380 kJ) erforderlich. Die 18 t Recycliersäure wurden ohne Abtrennung der 1,2 t suspendierter Metallsulfate zum Schlackeaufschluß zurückgeführt.

Beispiel 2

17,5 t gemahlener Titanschlacke wurden mit 13,6 t frischer 96 %iger Schwefelsäure (80 °C) gemischt. Die Aufschlußreaktion wurde durch Zugabe von 20 t Recycliersäure (80,6 % $H_2SO_4$, 13,4 % $H_2O$, 6,0 % $MeSO_4$ (gelöst), entsprechend 85,7 % $H_2SO_4$ in der salzfreien Recycliersäure), die eine Temperatur von 142 °C hatte, gestartet. Beim Aufschlußstart lag die Konzentration der feststoff- und salzfreien Schwefelsäure wie in Beispiel 1 bei 90 %. Die nach ca. 15 min erreichte Maximaltemperatur lag bei 207 °C. Die

EP 0 197 507 B1

Lufteinblasung wurde analog Beispiel 1 durchgeführt. Nach 7 h Reifezeit lag die Temperatur bei 165° C; die $TiO_2$-Ausbeute betrug 95,4 %.

Der weitere Prozeß wurde analog Beispiel 1 durchgeführt. Die vorkonzentrierte Säure wurde jedoch nicht in Plinke-Pauling-Kesseln auf 96 % $H_2SO_4$ eingedampft, sondern erfindungsgemäß in einem Horizontalverdampfer mit Tantalwärmetauscher und 15 bar-Dampf als Heizmittel auf 85,7 % $H_2SO_4$ (als salzfreie Säure gerechnet) eingedampft. Dabei wurde die Säure in einem Graphitwärmetauscher mit 1,3 bar-Dampf von 50 auf 100° C vorgewärmt. Die Eindampfung im Horizontalverdampfer erfolgte bei 60 mbar, wobei die Temperatur der ausfließenden Recycliersäure 160° C betrug. Der Dampfverbrauch für die Erzeugung von 20,0 t Recycliersäure betrug 10 t 15 bar-Dampfes. Der 1,3 bar-Dampf zur Vorwärmung der vorkonzentrierten Schwefelsäure wurde durch Entspannen des 15 bar-Dampfkondensats erzeugt. Unter Berücksichtigung der Wiederverwendbarkeit des 120° C heißen Dampfkonensats zur Dampferzeugung lag der Energieverbrauch zur Herstellung der Recycliersäure aus vorkonzentrierter Säure bei 22 700 kJ. Außerdem wurden 0,6 t 5bar-Dampf beim Starten der Aufschlußreaktion eingespart. Somit ergab sich gegenüber dem Stand der Technik ein Vorteil von 33 % des Energiebedarfs.

Beispiel 3

17,5 t gemahlener Titanschlacke wurden mit 13,6 t frischer 96 %iger Schwefelsäure (75° C) gemischt. Die Aufschlußreaktion wurde durch Zugabe von 20,76 t Recycliersäure gestartet (77,65 % $H_2SO_4$, 16,57 % $H_2O$, 5,78 % $MeSO_4$, entsprechend 82,4 % $H_2SO_4$ in der salzfreien Säure), die eine Temperatur von 140° C hatte, Bis zum Erreichen der Maximaltemperatur von 192° C nach 14 min wurde Luft ($350 m^3_n/h$) durch die Reaktionsmasse geblasen. Danach wurde 5 bar-Dampf (180° C, 20 min lang 0,3 t/h und weitere 7 h lang 20 kg/h) durch die Reaktionsmasse geblasen. Nach Abstellen des Dampfes betrug die Temperatur des Aufschlußkuchens 172° C, die $TiO_3$-Ausbeute 95,2 %.

Der weitere Prozeß wurde analog Beispiel 1 durchgeführt; die Eindampfung II, bei der 25,7 t vorkonzentrierter Säure zu 20,76 t Recycliersäure eingedampft wurden, erfolgte in dem gleichen Horizontalverdampfer wie bei Beispiel 2 bei 60 mbar. Die eingespeiste vorkonzentrierte Säure hatte eine Temperatur von 89° C, die ausgespeiste Recycliersäure eine Temperatur von 145° C. Statt 5,7 t $H_2O$ mußten nur 4,94 t $H_2O$ verdampft werden. Der gesamte Energieverbrauch für die Herstellung der Recycliersäure aus vorkonzentrierter Säure und die Durchblasung des Aufschlußkuchens mit Dampf lag bei 19 460 kJ gegenüber 22 700 kJ bei Beispiel 2.

Beispiel 4

In Laboratoriumsversuchen wurde geprüft, wie die Temperatur der Recycliersäure gesenkt werden kann, ohne daß Probleme durch einen zu langsamen Verlauf der Aufschlußreaktion entstehen. Dabei wurde 500 g Schlacke mit verschiedener Mahlfeinheit in 520 g 96 %ige Schwefelsäure eingerührt und auf die Temperatur $T_1$ erwärmt. Anschließend wurde die Mischung in einem isolierten Gefäß mit 590 g reiner 85 %iger Schwefelsäure der Temperatur $T_2$ versetzt. Unter Einleiten von 250 l Luft/h wurde gerührt und der Temperaturverlauf registriert. Die Versuchsergebnisse sind in Tabelle 1 zusammengestellt. $T_3$ ist die Temperatur der Mischung nach Zugabe der 85 %igen Schwefelsäure, $T_4$ die erreichte Maximaltemperatur. t ist die Zeitdauer bis zum Erreichen der Maximaltemperatur nach Zugabe der 85 %igen Säure.

5

## Tabelle 1

| Vers. Nr. | Mahlfeinheit Gew.% < 40σm | $T_1$ [°C] | $T_2$ [°C] | $T_3$ [°C] | $T_4$ [°C] | t [min] |
|---|---|---|---|---|---|---|
| 1 | 81 | 50 | 110 | 76 | – | – |
| 2 | 81 | 50 | 140 | 91 | 106 | 36 |
| 3 | 81 | 70 | 140 | 101 | 154 | 67 |
| 4 | 81 | 80 | 140 | 109 | 193 | 37 |
| 5 | 81 | 70 | 160 | 117· | 192 | 23 |
| 6 | 100 | 50 | 120 | 86 | 168 | 42 |
| 7 | 100 | 50 | 140 | 95 | 185 | 28 |

Die Versuchsergebnisse zeigen, daß bei feinerer Ausmahlung der Titanschlacke (Versuch 7) die Temperatur der Recycliersäure geringer sein kann als bei gröberer Ausmahlung (Versuch 2) und trotzdem etwa der gleiche Reaktionsverlauf erreicht wird. Statt der Temperatur der Recycliersäure kann selbstverständlich auch diejenige der 96 %igen Frischsäure gesenkt werden.

Der langsamere Temperaturanstieg der Laboratoriumsaufschlüsse im Vergleich zum Betriebsmaßstab ist auf die relativ hohen Temperaturverluste zurückzuführen.

**Ansprüche**

1. Verfahren zur Herstellung von Titandioxid durch diskontinuierlichen Aufschluß von Titanschlacke mit Schwefelsäure, Herstellen einer für die Hydrolyse geeigneten Titanylsulfatlösung aus dem beim Aufschluß erhaltenen festen Aufschlußkuchen, Hydrolyse des Titanylsulfats, Abtrennen und Kalzinieren des titanhaltigen Hydrolysats, Eindampfen der vom Hydrolysat abgetrennten Dünnsäure und Wiederverwendung der aus der eingedampften Dünnsäure abgetrennten Schwefelsäure beim Titanschlackeaufschluß, dadurch gekennzeichnet, daß nach der Eindampfung der Dünnsäure von den festen Metallsulfaten und-hydrogensulfaten eine 60- bis 75%ige vorkonzentrierte Schwefelsäure abgetrennt wird, die unter Vakuum bis zu einer Konzentration zwischen 76 und 87 % $H_2SO_4$ (berechnet als salzfreie Schwefelsäure) weiter eingedampft und zusammen mit 30 bis 80° C warmer 95- bis 98%iger Schwefelsäure beim Aufschluß der gemahlenen Titanschlacke eingesetzt wird, wobei die Aufschlußreaktion durch Zugabe von 80 bis 190° C heißer 76- bis 87%iger Schwefelsäure gestartet wird.

2. Verfahren gemäß Anspruch 1, dadurch gekennzeichnet, daß die Titanschlacke mit 50 bis 80° C warmer 95- bis 98%iger Schwefelsäure ("Frischsäure") gemischt wird.

3. Verfahren gemäß einem der Ansprüche 1 oder 2, dadurch gekennzeichnet, daß die Aufschlußreaktion durch Zugabe von 100 bis 160° C heißer 76- bis 87%iger Schwefelsäure ("Recycliersäure") gestartet wird.

4. Verfahren gemäß einem oder mehreren der Ansprüche 1 bis 3, dadurch gekennzeichnet, daß die Konzentration der Schwefelsäure beim Start der Aufschlußreaktion zwischen 87 und 91 %, vorzugsweise 88 und 90 % $H_2SO_4$ (gerechnet als feststoff- und salzfreie Säure) liegt und 35 bis 70 % der benötigten Schwefelsäure als Recycliersäure aus dem Prozeß zurückgewonnen werden.

5. Verfahren gemäß einem der Ansprüche 1 bis 4, dadurch gekennzeichnet, daß die Herstellung der 76 bis 87 %igen Säure aus 60 bis 75 %iger vorkonzentrierter Schwefelsäure durch Eindampfen bei 120 bis 190° C und 40 bis 150 mbar vorgenommen wird.

6. Verfahren gemäß Anspruch 5, dadurch gekennzeichnet, daß als Verdampfer Horizontalverdampfer mit Tantalwärmetauschern verwendet werden.

7. Verfahren gemäß Anspruch 5, dadurch gekennzeichnet, daß als Verdampfer Umlaufverdampfer verwendet werden.

**Claims**

1. A process for the production of titanium dioxide by discontinuous digestion of titanium slag with sulfuric acid, preparation of a titanyl sulfate solution from the solid digestion cake obtained after digestion, hydrolysis of the titanyl sulfate, separation and calcination of the titanium-containing hydrolyzate, concentration of the thin acid removed from the hydrolyzate by evaporation and re-use of the sulfuric acid removed from the concentrated thin acid in the digestion of titanium slag, characterized in that, after concentration of the thin acid by evaporation, a 60 to 75% preconcentrated sulfuric acid is separated from the solid metal sulfates and hydrogen sulfates and is further concentrated by evaporation in vacuo to a concentration of 76 to 87% $H_2SO_4$ (expressed as salt-free sulfuric acid) and used together with 95 to 98% sulfuric acid at 30 to 80°C in the digestion of the ground titanium slag, the digestion reaction being initiated by addition of 76 to 87% sulfuric acid at 80 to 190°C.

2. A process as claimed in claim 1, characterized in that the titanium slag is mixed with 95 to 98% sulfuric acid ("fresh acid") at 50 to 80°C.

3. A process as claimed in claim 1 or 2, characterized in that the digestion reaction is initiated by addition of 76 to 87% sulfuric acid (recycled acid) at 100 to 160°C.

4. A process as claimed in one or more claims 1 to 3, characterized in that the concentration of the sulfuric acid at the start of the digestion reaction is between 87 and 91% and preferably between 88 and 90% $H_2SO_4$ (expressed as solids-free and salt-free acid) and 35 to 70% of the sulfuric acid required is recovered from the process as recycled acid.

5. A process as claimed in any of claims 1 to 4, characterized in that the 76 to 87% acid is prepared from 60 to 75% preconcentrated sulfuric acid by concentration through evaporation at 120 to 190°C/40 to 150 mbar.

6. A process as claimed in claim 5, characterized in that horizontal evaporators incorporating tantalum heat exchangers are used as the evaporator.

7. A process as claimed in claim 5, characterized in that forced-circulation evaporators are used as the evaporator.

**Revendications**

1. Procédé pour fabriquer du dioxyde de titane par attaque discontinue de scories de titane avec de l'acide sulfurique, fabrication d'une solution de sulfate de titanyle appropriée pour l'hydrolyse à partir du gâteau solide obtenu lors de l'attaque à l'acide, hydrolyse du sulfate de titanyle, séparation et calcination de l'hydrolysat contenant du titane, concentration par évaporation de l'acide dilué séparé de l'hydrolysat et réutilisation de l'acide sulfurique séparé de l'acide dilué concentré par évaporation pour l'attaque des scories de titane, caractérisé en ce que, après avoir concentré par évaporation l'acide dilué, on sépare des sulfates métalliques et hydrogénosulfates métalliques solides un acide sulfurique pré-concentré d'une concentration de 60 à 75%, qui est encore concentré par évaporation sous vide jusqu'à une valeur de 76 à 87% $H_2SO_4$ (calculée pour l'acide sans sels) et introduit, lors de l'attaque de la scorie de titane broyée, avec un acide sulfurique chaud d'une concentration de 95 à 98% et d'une température de 30 à 80°C, la réaction d'attaque étant démarrée par addition d'acide sulfurique chaud d'une concentration de 76 à 87% et d'une température de 80 à 190°C.

2. Procédé selon la revendication 1, caractérisé en ce que les scories de titane sont mélangées avec de l'acide sulfurique chaud (acide "frais") d'une concentration de 95 à 98% et d'une température de 50 à 80°C.

3. Procédé selon l'une des revendications 1 ou 2, caractérisé en ce que la réaction d'attaque est démarrée par addition d'acide sulfurique chaud d'une concentration de 76 à 87% et d'une température de 100 à 160° C.

4. Procédé selon l'une ou plusieurs des revendications 1 à 3, caractérisé en ce que la concentration de l'acide sulfurique au démarrage de la réaction d'attaque est de 87 à 91%, de préférence de 88 à 90% $H_2SO_4$ (calculée pour l'acide sans substances solides et sans sels) et que l'on récupère à partir du procédé 35 à 70% de l'acide sulfurique nécessaire sous forme d'acide recyclé.

5. Procédé selon l'une des revendications 1 à 4, caractérisé en ce que l'on fabrique l'acide d'une concentration de 76 à 87% à partir d'acide sulfurique pré-concentré à 60 - 75% en effectuant une concentration par évaporation à une température de 120 à 190° C et une pression de 40 à 150 mbar.

6. Procédé selon la revendication 5, caractérisé en ce que l'on emploie comme évaporateurs des évaporateurs horizontaux avec échangeurs de chaleur au tantale.

7. Procédé selon la revendication 5, caractérisé en ce que l'on emploie comme évaporateurs des évaporateurs à recirculation.